# EUROPÄISCHE PATENTANMELDUNG

(11) **EP 4 286 707 A1**
(43) Veröffentlichungstag der Anmeldung: **06.12.2023**
(21) Anmeldenummer: 23157678.6
(22) Anmeldetag: 21.02.2023
(51) Int. Cl.: F16F 7/08, F16F 7/09, F16F 9/32, D06F 37/20

(54) **DÄMPFER, INSBESONDERE REIBUNGSDÄMPFER**

(30) Priorität: 17.03.2022 DE 102022202661
(71) Anmelder: SUSPA GmbH, 90518 Altdorf (DE)
(72) Erfinder: Pelczer, Andreas, 90518 Altdorf (DE); Mayer, Marco, 92237 Sulzbach-Rosenberg (DE); Ertl, Sebastian, 92265 Edelsfeld (DE); Weder, Michael, 90455 Nürnberg (DE)
(74) Vertreter: Rau, Schneck & Hübner Patentanwälte Rechtsanwälte PartGmbB

(57) **Zusammenfassung**

Ein Dämpfer, insbesondere für Waschmaschinen mit Schleudergang, umfasst ein eine Mittel-Längs-Achse (3) aufweisendes, einen Gehäuse-Innenraum (21) zumindest teilweise durch Gehäuse-Wände (25) umschließendes Gehäuse (2), einen in dem Gehäuse (2) entlang der Mittel-Längs-Achse (3) verschiebbaren, aus dem Gehäuse (2) herausgeführten Stößel (4), an freien Enden (5, 9) des Gehäuses (2) und des Stößels (4) angeordnete Befestigungs-Elementen (7, 10) und mindestens ein Ausgleichs-Element (28) zum Ausgleichen eines Spiels zwischen den Gehäuse-Wänden (25) und dem Stößel (4).

## Beschreibung

Die vorliegende Patentanmeldung nimmt die Priorität der deutschen Patentanmeldung DE 10 2022 202 661.6 in Anspruch, deren Inhalt durch Bezugnahme hierin aufgenommen wird.

Die Erfindung betrifft einen Dämpfer, insbesondere einen Reibungsdämpfer, wie er beispielsweise in Waschmaschinen mit Schleudergang eingesetzt wird.

Aus EP 1 862 694 A1 ist ein Reibungsdämpfer mit einem Gehäuse bekannt, in dem ein Stößel axial verlagerbar angeordnet ist. An dem Stößel ist ein Reibbelag gehalten, der an gegenüberliegenden Gehäuse-Wänden des Gehäuses reibend anliegt. Damit der Stößel im Übrigen reibungsfrei gegenüber dem Gehäuse verlagerbar ist, ist ein Spiel zwischen den Gehäuse-Wänden und dem Stößel erforderlich. In Folge von Fertigungstoleranzen kann ein übergroßes Spiel zu einer unerwünschten Beweglichkeit des Stößels im Gehäuse und damit zu Klappergeräuschen während des Betriebs des Dämpfers führen.

Der Erfindung liegt die Aufgabe zugrunde, einen Reibungsdämpfer mit verbesserten akustischen Eigenschaften bereitzustellen.

Diese Aufgabe wird durch die Merkmale des Anspruchs 1 gelöst. Der Kern der Erfindung besteht darin, dass bei einem Dämpfer, insbesondere einem Reibungsdämpfer, ein in einem Gehäuse längs verlagerbarer Stößel mittels mindestens eines Ausgleichs-Elements abgestützt ist. Insbesondere ist das mindestens eine Ausgleichs-Element an dem Stößel und/oder dem Gehäuse angeordnet, insbesondere daran befestigt. Bei einer Relativverlagerung des Stößels gegenüber dem Gehäuse wird das mindestens eine Ausgleichs-Element mitbewegt. Das mindestens eine Ausgleichs-Element dient zum Ausgleichen eines Spiels zwischen jeweils einer Gehäuse-Wand des Gehäuses und dem Stößel. Das mindestens eine Ausgleichs-Element ist insbesondere flexibel, insbesondere ausgleichend, insbesondere elastisch und/oder insbesondere federnd. Mit dem mindestens einen Ausgleichselement ist eine stabile Verlagerung des Stößels entlang einer Mittel-Längs-Achse des Gehäuses verbessert. Das mindestens eine Ausgleichs-Element ermöglicht insbesondere ein Ausgleichen und insbesondere ein Abstützen des Stößels an gegenüberliegenden Gehäuse-Wänden.

Das mindestens eine Ausgleichs-Element ist insbesondere eine erhabene Struktur, die in einen vom Spiel vorgegebenen Zwischenraum vorsteht, der zwischen dem Stößel und einer der Gehäuse-Wände begrenzt ist. Insbesondere erstreckt sich das mindestens eine Ausgleichs-Element in einer Richtung, die quer und insbesondere senkrecht zu einer vom Stößel festgelegten Mittenebene orientiert ist, die die Mittel-Längs-Achse enthält.

Ein Ausgleich des Spiels ist insbesondere dann gegeben, wenn das ursprüngliche Spiel zwischen Stößel und Gehäuse-Wand reduziert ist. Klappergeräusche werden dadurch reduziert.

Eine Abstützung durch das mindestens eine Ausgleichs-Element ist gegeben, wenn durch das mindestens eine Ausgleichs-Element ein Kontakt, insbesondere ein dauerhafter Kontakt, zwischen dem Stößel und der Gehäuse-Wand vorliegt. Klappergeräusche sind dadurch im Wesentlichen ausgeschlossen.

Das mindestens eine Ausgleichs-Element weist insbesondere eine Flexibilität auf, insbesondere in Form einer Struktur-Flexibilität und/oder einer Material-Flexibilität. Eine Struktur-Flexibilität ist insbesondere dann gegeben, wenn das mindestens eine Ausgleichs-Element allein wegen seiner Struktur, also seiner Geometrie, ein elastisches Verhalten ermöglicht. Insbesondere ist das mindestens eine Ausgleichs-Element als dünne, insbesondere stegartige Struktur ausgeführt, wobei Länge und/oder Höhe der stegartigen Struktur deutlich größer sind als dessen Dicke und insbesondere das mindestens 3-Fache, insbesondere das mindestens 5-Fache, insbesondere das mindestens 10-Fache und insbesondere das mindestens 20-Fache betragen. Eine Material-Flexibilität ist insbesondere dadurch ermöglicht, dass das Ausgleichs-Element ein flexibles Material aufweist, insbesondere in einem Kontaktbereich, der zum Anliegen an der Gehäuse-Wand und/oder dem Stößel dient. Ein elastisches Material ist insbesondere ein weiches Material, insbesondere ein weicher Kunststoff, insbesondere Elastomere, insbesondere Vulkanisate von Naturkautschuk und/oder Silikonkautschuk, oder geschäumte Kunststoffe, also Schaumstoffe, insbesondere Polyurethan-Schaumstoffe. Der weiche Kunststoff weist insbesondere eine Härte von höchstens 90 Shore A, insbesondere von höchstens 85 Shore A und insbesondere von höchstens 80 Shore A auf.

Ein Dämpfer gemäß Anspruch 2 ermöglicht eine unkomplizierte Fertigung. Insbesondere kann der Stößel aus Kunststoffmaterial einteilig im Spritzgussverfahren hergestellt werden. Das mindestens eine Ausgleichs-Element kann als Formelement einteilig im Spritzgießverfahren mit angeformt werden. Insbesondere kann das mindestens eine Ausgleichs-Element ein separates Material umfassen und/oder zumindest bereichsweise davon ummantelt werden. Dazu eignet sich insbesondere das 2-Komponenten-Spritzgussverfahren.

Ein Dämpfer gemäß Anspruch 3 ermöglicht eine stabile Anordnung des mindestens einen Ausgleichselements, insbesondere an einer Innenseite des Gehäuses, insbesondere benachbart zu den Gehäuse-Wänden, die dem Stö-ßel zugewandt sind. Unerwünschte Verunreinigungen in Folge von Spalten am Stößel sind vermieden. Das mindestens eine Ausgleichs-Element am Gehäuse ist insbesondere als Federelement, insbesondere als federndes Flächenelement in der Art einer Blattfeder, ausgeführt, insbesondere aus einem metallischen Material, insbesondere Stahl und insbesondere Edelstahl, und/oder einem Kunststoffmaterial, insbesondere Hart-Kunststoff, insbesondere Polyamid (PA), Polymethylmethacrylat (PMMA), Polypropylen (PP) und/oder Polycarbonat (PC).

Ein Dämpfer gemäß Anspruch 4 gewährleistet einen stabilen Ausgleich des Spiels entlang einer Auszugs- und/oder Einschubrichtung des Stößels gegenüber dem Gehäuse. Das mindestens eine Ausgleichs-Element erstreckt sich entlang der Mittel-Längs-Achse über mindestens 30 % einer freien Länge des Stößels, insbesondere über mindestens 50 % der freien Länge, insbesondere über mindestens 70 % der freien Länge, insbesondere über mindestens 80 % der freien Länge, insbesondere über mindestens 90 % der freien Länge, insbesondere über mindestens 95 % der freien Länge und insbesondere über die gesamte freie Länge des Stößels. Als freie Länge wird insbesondere ein Bereich des Stößels verstanden, der frei von weiteren Funktionskomponenten ist.

Ein Dämpfer gemäß Anspruch 5 gewährleistet eine stabilere Anordnung des Stößels im Gehäuse. Die Abstützung ist verbessert. Insbesondere sind mindestens zwei Ausgleichs-Elemente in entgegengesetzten Richtungen des Stößels, insbesondere antiparallel und insbesondere senkrecht zur Mittenebene, orientiert. Das Risiko von Klappergeräuschen ist zusätzlich reduziert. Insbesondere sind die Ausgleichs-Elemente am Stößel angeordnet und insbesondere an gegenüberliegenden Stößelflächen ausgebildet. Die Ausgleichs-Elemente sind insbesondere beidseitig am Stößel angebracht und dienen zur Abstützung des Stößels an gegenüberliegenden Gehäuse-Wänden.

Ein Dämpfer gemäß Anspruch 6 verbessert die Verlagerung des Stößels. Durch das mindestens eine Ausgleichs-Element ist der Stößel in einer zur Mittel-Längs-Achse quer und insbesondere senkrecht orientierten Stützrichtung zuverlässig abgestützt. Entlang der Stützrichtung ist der Stößel mit einer Vorspannung angeordnet. Die Vorspannung resultiert daraus, dass der Stößel mit dem mindestens einen, insbesondere den mindestens zwei, sich in Stützrichtung erstreckenden Ausgleichselement eine Dicke aufweist, die größer ist als eine lichte Weite des Gehäuses. Beim Einführen des Stößels in das Gehäuse wird das mindestens eine Ausgleichs-Element flexibel und insbesondere elastisch in Richtung des Stößels gedrückt. Damit wird eine Vorspannung entlang der Stützrichtung verursacht.

Ein Ausgleichs-Elements gemäß Anspruch 7 weist eine besonders vorteilhafte Struktur auf. Es wurde insbesondere herausgefunden, dass es vorteilhaft ist, wenn das mindestens eine Ausgleichs-Element eine Längserstreckung aufweist, die insbesondere nicht-linear und insbesondere quer zur Mittel-Längs-Achse verläuft. Das mindestens eine Ausgleichs-Element ist insbesondere als Lamelle ausgeführt, die bezüglich der Mittel-Längs-Achse schräg orientiert ist und/oder wellenförmig verläuft. Eine derartige Lamelle weist eine erhöhte überstrichene Fläche, insbesondere an der Gehäuse-Innenwand, auf. Dadurch wird der Verschleiß der Lamelle und/oder die entsprechende Kontaktfläche an der Gehäuse-Innenwand reduziert. Die Lebensdauer des Dämpfers ist erhöht.

Die Ausgestaltung eines Dämpfers gemäß Anspruch 8 verbessert die Axialführung des Stößels entlang der Mittel-Längs-Achse. Die doppel-T-förmige Ausgestaltung von Gehäuse und/oder Stößel ist in einer quer und insbesondere senkrecht zur Mittel-Längs-Achse orientierten Ebene gegeben.

Ein Dämpfer gemäß Anspruch 9 ermöglicht eine stabile Abstützung im Gehäuse. Der Stößel weist insbesondere einen zwischen zwei Seitenstegen angeordneten Zwischensteg auf, der eine Mittenebene definiert, die die Mittel-Längs-Achse enthält. Das mindestens eine Ausgleichs-Element erstreckt sich insbesondere in einer Richtung quer und insbesondere senkrecht zur Mittenebene. Insbesondere liegt der mindestens eine Reibbelag an einer Gehäuse-Innenwand des Gehäuses reibend an. Insbesondere liegt der mindestens eine Reibbelag an gegenüberliegenden Gehäuse-Wänden reibend an. Die Gehäuse-Wände sind insbesondere parallel zueinander orientiert. Insbesondere ist genau ein Reibbelag in jeweils einer Reibbelag-Ausnehmung angeordnet.

Zusätzlich oder alternativ kann der mindestens eine Reibbelag auch an einem Reib-Einsatz reibend anliegen. Ein unmittelbarer Kontakt des Reibbelages mit der Gehäuse-Wand ist dann nicht gegeben. Es ist auch denkbar, dass der mindestens eine Reibbelag mit einer Reibfläche an der Gehäuse-Wand und mit einer weiteren, der anderen Reibfläche gegenüberliegend angeordneten Reibfläche an einem Reib-Einsatz reibend anliegt. Es ist auch denkbar, dass sich ein Reibbelag nur teilweise entlang der Längsachse des Gehäuses erstreckt, so dass der Reibbelag bei einer Axialverschiebung des Stößels zunächst an dem Reib-Einsatz und anschließend an der Gehäuse-Wand oder umgekehrt reibend anliegt.

Ein Dämpfer gemäß Anspruch 10 ermöglicht eine vorteilhafte Nutzung eines Reibbelags am Stößel. Dazu ist am Stößel als Funktionskomponente mindestens eine Reibbelags-Ausnehmung angeordnet.

Ein Dämpfer gemäß Anspruch 11 ist kompakt und effizient ausgeführt.

Ein Dämpfer gemäß Anspruch 12 ermöglicht eine passive Reibungswirkung. Der Zwischensteg ist insbesondere leistenartig oder plattenartig ausgeführt. Der Zwischensteg kann eine Quaderform aufweisen. Der Zwischensteg ist flach und insbesondere eben ausgeführt.

Ein Dämpfer gemäß Anspruch 13 ist unkompliziert ausgeführt. Ein Gehäusekorpus kann insbesondere einteilig im Kunststoff-Spritzgussverfahren kosteneffizient hergestellt werden.

Ein Dämpfer gemäß Anspruch 14 ermöglicht verbesserte Reibbedingungen, indem der mindestens eine Reibbelag an einem dafür vorgesehenen Reib-Einsatz an der Innenseite des Gehäuses reibend anliegt. In einer besonders vorteilhaften Ausgestaltung kann der Reib-Einsatz zusätzlich die Funktion des mindestens einen Ausgleichs-Elements übernehmen. Das bedeutet, dass das mindestens eine Ausgleichs-Element und der mindestens eine Reib-Einsatz durch ein und dieselbe Komponente ausgeführt sind. Ein derartiger Dämpfer weist eine erhöhte Funktionsintegration auf.

Sowohl die in den Patentansprüchen angegebenen Merkmale als auch die in den Ausführungsbeispielen erfindungsgemäßer Dämpfer angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine perspektivische Explosionsdarstellung eines Dämpfers gemäß einem ersten Ausführungsbeispiel mit Ausgleichs-Elementen am Stößel als wellenförmige Lamellen,
- Fig. 2: eine Draufsicht auf den Dämpfer gemäß Fig. 1 mit anteilig in das Gehäuse eingeschobenem Stößel,
- Fig. 3: eine Schnittdarstellung gemäß Schnittlinie III-III in Fig. 2,
- Fig. 4: eine vergrößerte Schnittdarstellung gemäß Schnittlinie IV-IV in Fig. 3,
- Fig. 5 bis 7: Fig. 2 bis 4 entsprechende Darstellungen eines Dämpfers gemäß einem zweiten Ausführungsbeispiel mit linear und parallel zur Mittel-Längs-Achse orientierten Lamellen,
- Fig. 8 bis 10: Fig. 2 bis 4 entsprechende Darstellungen eines Dämpfers gemäß einem dritten Ausführungsbeispiel mit mehreren Quer-Lamellen,
- Fig. 11 bis 13: Fig. 2 bis 4 entsprechende Darstellungen eines Dämpfers gemäß einem vierten Ausführungsbeispiel mit Linear-Lamellen, die quer zur Mittel-Längs-Achse orientiert sind,
- Fig. 14: eine Fig. 4 entsprechende Schnittansicht eines Dämpfers gemäß einem fünften Ausführungsbeispiel mit flächenartigen Federelementen als Ausgleichs-Elementen am Gehäuse.

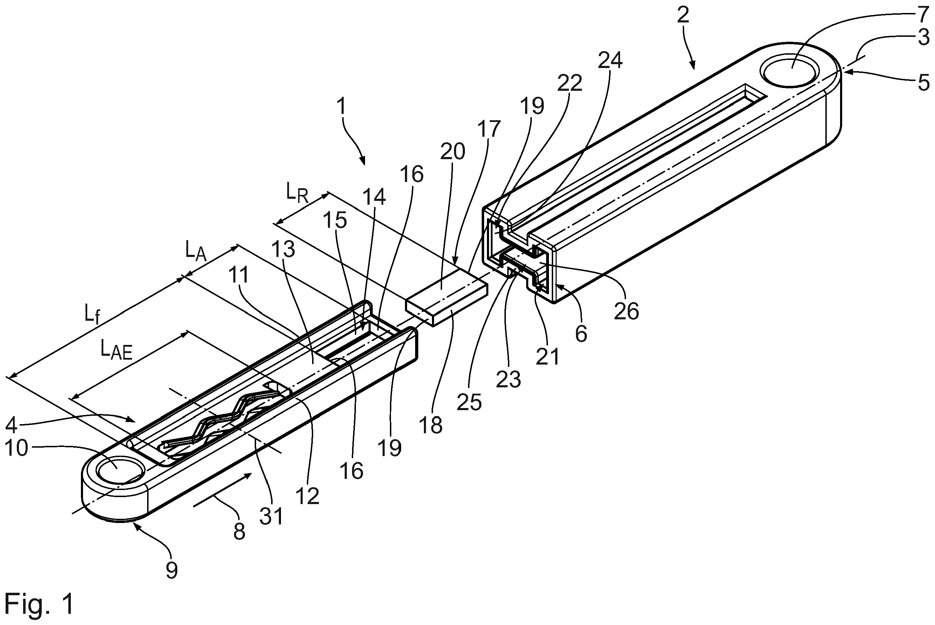

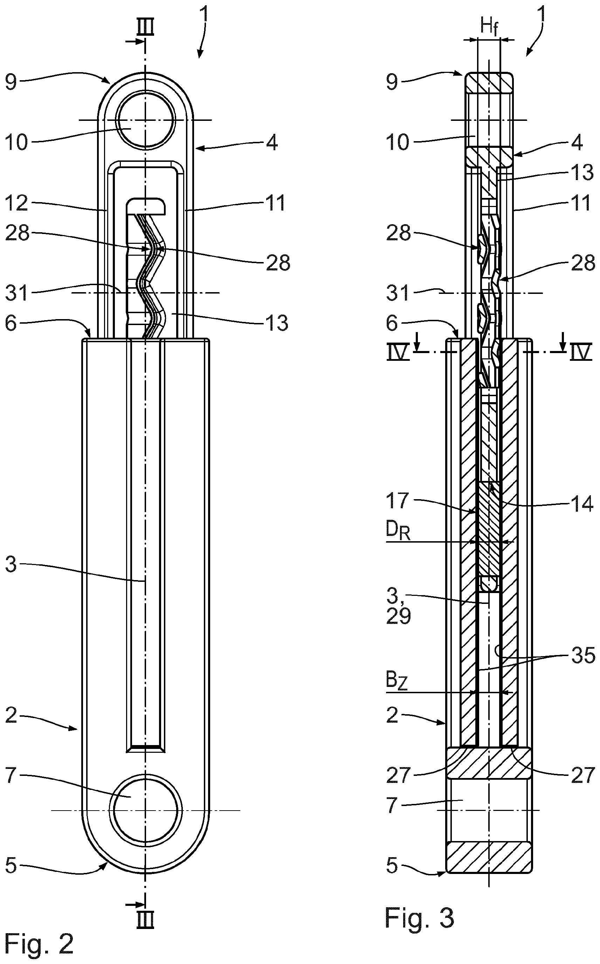

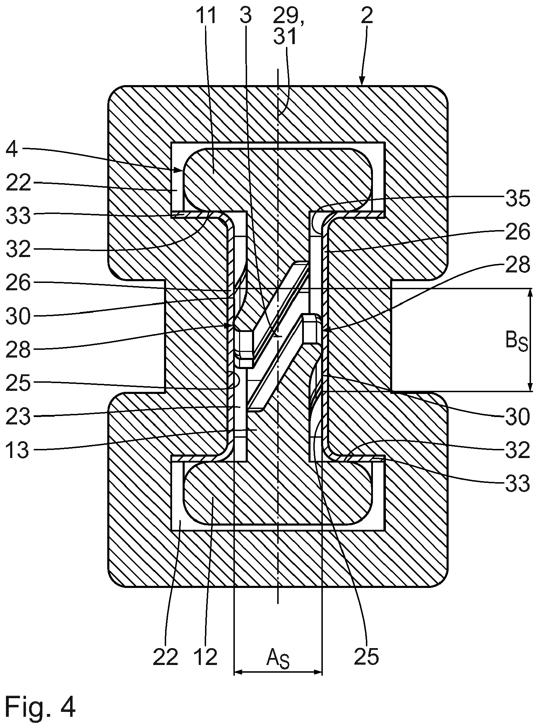

Im Folgenden wird unter Bezugnahme auf die Fig. 1 bis 4 ein erstes Ausführungsbeispiel der Erfindung beschrieben. Ein Dämpfer 1 weist ein Gehäuse 2 mit einer Mittel-Längs-Achse 3 auf, in dem ein Stößel 4 verschiebbar geführt ist. Das Gehäuse 2 ist einteilig ausgebildet. Es ist auch möglich, das Gehäuse 2 aus mehreren Teilen, insbesondere zwei Teilen, zusammengesetzt vorzusehen. Das Gehäuse 2 weist ein äußeres, axiales Ende 5 sowie ein dem Stößel 4 zugewandtes, gegenüberliegendes Ende 6 auf. Im Bereich des Endes 5 weist das Gehäuse 2 ein Befestigungs-Element 7, insbesondere in Form eines Auges, über das das Gehäuse 2 in der Waschmaschine befestigt und angelenkt wird. Der Stößel 4 ist entlang einer Einschub-Richtung 8, die parallel zur Mittel-Längs-Achse 3 verläuft, in das Gehäuse 2 einschiebbar. Am entgegen der Richtung 8 liegenden äußeren Ende 9 des Stößels 4 weist dieser ein Befestigungs-Element 10 in Form eines Auges auf, über das der Stößel 4 in einer Waschmaschine angelenkt und befestigt wird. Der Stößel 4 kann durch nicht dargestellte Auszugs-BegrenzungsMittel daran gehindert sein, dass man diesen vollständig aus dem Gehäuse 2 ziehen kann.

Der Stößel 4 weist beginnend hinter dem Befestigungs-Element 10 in Richtung 8 einen doppel-T-förmigen bzw. H-förmigen Querschnitt auf, der gebildet wird durch zwei Seitenstege 11, 12, die parallel zueinander verlaufen und durch einen dazwischen angeordneten Zwischensteg 13, der die Seitenstege 11, 12 miteinander verbindet. Der Zwischensteg 13 verläuft senkrecht zu den Seitenstegen 11, 12. Im Bereich des in Richtung 8 liegenden Endes des Stößels 4 ist in dem Zwischensteg 13 eine Reibbelags-Ausnehmung 14 vorgesehen, die den Zwischensteg 13 vollständig durchdringt, also nach zwei Seiten - oben und unten - hin offen ist. Die Ausnehmung 14 wird umfangsseitig, d. h. in der durch den Zwischensteg 13 gebildeten Ebene, nach allen Seiten hin durch den Zwischensteg 13 begrenzt. Die Ausnehmung 14 weist eine rechteckige Form mit entlang der Richtung 8 liegenden parallelen Längsseiten 15 und diese verbindenden, parallelen Stirnseiten 16 auf. In der Ausnehmung 14 ist ein Reibbelag 17 angeordnet, dessen Form im einfachsten Fall im Wesentlichen der der Ausnehmung 14 entspricht. Der Reibbelag 17 ist somit quaderförmig, wobei seine Stirnseiten 19 an den Stirnseiten 16 der Ausnehmung 14 und seine Längsseiten 18 an den Längsseiten 15 der Ausnehmung 14 anliegen. Ansonsten weist der Reibbelag 17 zwei parallel zueinander verlaufende, die Ober- und Unterseite des Quaders bildende Reibflächen 20 auf. Der Reibbelag 17 besteht beispielsweise aus einem geeigneten Schaumstoff. Der Reibbelag 17, der selber vorzugsweise einteilig ausgebildet ist, liegt unmittelbar an dem Rand der Ausnehmung 14 an des vorzugsweise einteilig ausgebildeten Stößels 4.

Das Gehäuse 2 umschließt einen Gehäuse-Innenraum 21, dessen Querschnittsform der Außenkontur des Stößels 4 entspricht, d. h. das Gehäuse 2 weist ebenfalls eine doppel-T-Querschnittsform auf. Im Gehäuse 2 sind zwei sich entlang der Mittel-Längs-Achse 3 erstreckende, zu den Seitenstegen 11, 12 korrespondierende Längskanäle 22 gebildet, die durch einen zum Zwischensteg 13 korrespondierenden Zwischenkanal 23 miteinander verbunden sind. Die Längskanäle 22 werden durch Längskanal-Wände 24 begrenzt. Der Zwischenkanal 23 wird durch zwei einander gegenüberliegende, parallel zueinander verlaufende Zwischenkanal-Wände 25 begrenzt. Auf den Zwischenkanal-Wänden 25 sind aus Blech bestehende, flächige Reib-Einsätze 26 befestigt. Diese sind im Bereich des Übergangs zu dem Befestigungs-Element 10 durch L-förmige Rücksprünge 27, die in entsprechenden Längsnuten in der Zwischenkanal-Wand 25 vorgesehen sind, fixiert. Die Reib-Einsätze 26 erstrecken sich über die volle Länge des Gehäuse-Innenraums 21 und liegen jeweils zwischen den Zwischenkanal-Wänden 25 und dem Zwischensteg 13 des Stößels 4. Das Gehäuse 2 ist vorteilhafterweise aus Kunststoff gefertigt. Die Reib-Einsätze 26 können beispielsweise aus Stahl-Blech bestehen.

Der Dämpfer 1 ist ein Reibungsdämpfer.

An dem Stößel 4 sind insbesondere an dessen Zwischensteg 13 zwei Ausgleichs-Elemente 28 angeordnet. Die Ausgleichs-Elemente 28 sind jeweils als wellenförmige Lamelle ausgeführt. Die Ausgleichs-Elemente 28 weisen entlang der Mittel-Längs-Achse 3 eine Ausgleichs-Element-Länge L_{AE} auf, die gemäß dem gezeigten Ausführungsbeispiel mehr als 50 % einer freien Länge L_{f} des Stößels 4 entspricht. Je größer die Länge L_{AE} ist, desto stabiler ist die Abstützung des Stößels 4 im Gehäuse 2. Als freie Länge L_{f} wird der Längenabschnitt des Zwischenstegs 13 der Mittel-Längs-Achse 3 verstanden, der durch das Befestigungs-Element 10 einerseits und die Reibbelags-Ausnehmung 14 andererseits axial begrenzt ist. Entlang der freien Länge L_{f} ist keine, insbesondere keine weitere, Funktionskomponente des Dämpfers 1 angeordnet. Eine Funktionskomponente ist beispielsweise die Reibbelags-Ausnehmung 14.

Die Ausgleichs-Elemente 28 sind quer und insbesondere senkrecht zu einer von dem Stößel 4, insbesondere dem Zwischensteg 13, definierten Mittenebene 29 orientiert. Die Mittenebene 29 enthält die Mittel-Längs-Achse 3.

Die Ausgleichs-Elemente 28 sind insbesondere einteilig an dem Stößel 4 angeformt, insbesondere im Kunststoff-Spritzgussverfahren. Die Ausgleichs-Elemente 28 dienen zur Abstützung des Stößels 4 im Gehäuse 2, insbesondere an den gegenüberliegend angeordneten Zwischenkanal-Wänden 25 oder den daran angebrachten Reib-Einsätzen 26.

Die Ausgleichs-Elemente 28 ermöglichen eine stabile Abstützung des Stö-ßels 4 an den gegenüberliegenden Zwischenkanal-Wänden 25. Ein, insbesondere durch Fertigungstoleranzen bedingtes, Spiel zwischen dem Stößel 4 und dem Gehäuse 2 kann ausgeglichen und insbesondere kompensiert werden.

Die Ausgleichs-Elemente 28 liegen jeweils mit einer Kontaktfläche 30 an der Zwischenkanal-Wand 25 bzw. dem Reib-Einsatz 26 an. Es ist möglich, die Ausgleichs-Elemente 28 insbesondere im Bereich der Kontaktflächen 30 mit einem separaten, insbesondere weichen, Material, insbesondere einem Weich-Kunststoff, auszuführen, um die Ausgleichswirkung und insbesondere eine federnde Wirkung der Ausgleichs-Elemente 28 zu verbessern.

Dadurch, dass die Ausgleichs-Elemente 28 wellenförmig ausgeführt sind, resultiert eine Stützbreite Bs, an der die Ausgleichs-Elemente 28 an den gegenüberliegenden Gehäuse-Wänden 25 abgestützt sind. Die Stützbreite Bs entspricht einer senkrechten Projektion der Kontaktflächen 30 auf eine der Gehäuse-Wände 25.

Die Ausgleichs-Elemente 28 ermöglichen eine vergleichsweise große Stützfläche Bs und damit eine reduzierte Flächenpressung auf die Kontaktflächen 30. Der Verschleiß der Ausgleichs-Elemente 28 und der Kontaktflächen 30 ist dadurch reduziert.

Mittels der Ausgleichs-Elemente 28 ist der Stößel 4 spielfrei in dem Gehäuse angeordnet. Eine unerwünschte Verlagerung des Stößels 4 in einer Richtung senkrecht zur Mittenebene 29 oder ein Kippen des Stößels um eine senkrecht zur Mittel-Längs-Achse 3 orientierte, in der Mittenebene 29 liegende Querachse 31 ist dadurch verhindert.

Die Ausgleichs-Elemente 28 sind in dem Gehäuse 2 mit einer Vorspannung angeordnet, die senkrecht zur Mittenebene 29 wirkt. Die Vorspannung ergibt sich daraus, dass die Ausgleichs-Elemente 28 im Bereich des Zwischenstegs 13 eine freie Höhe H_{f} aufweisen, die insbesondere größer ist als ein senkrechter Abstand Aₛ der gegenüberliegenden Zwischenkanal-Wände 25 bzw. der Reib-Einsätze 26. Das bedeutet, dass die Ausgleichs-Elemente 28 in senkrechter Richtung zur Mittenebene 29 zusammengedrückt werden, wenn der Stößel 4 in das Gehäuse 2 eingeführt ist.

Insbesondere ist der Stößel 4 symmetrisch bezüglich der Mittenebene 29 in dem Gehäuse 2 angeordnet.

Vorteilhaft ist es, wenn der Stößel 4 mit den beiden Seitenstegen 11, 12 parallel zur Mittel-Längs-Achse 3 in dem Gehäuse 2, insbesondere in den Längskanälen 22, axial geführt ist. Diese Axialführung wird insbesondere dadurch begünstigt, dass die Seitenstege 11, 12 mit einander zugewandten Führungsflächen 32 an L-förmig umgebogenen Abschnitten 33 der Reib-Einsätze 26 führend anliegen. Die Geräuschentwicklung ist dadurch zusätzlich reduziert.

Im Folgenden wird die Funktionsweise des Reibungsdämpfers beschrieben. Die gewünschte Reibungskraft kann beispielsweise durch die Wahl der Dicke D_{R} des Reibbelags 17 eingestellt werden. Insbesondere kann der Reibbelag 17 eine Dicke D_{R} besitzen, die größer als die Breite Bz des Zwischenkanals 23 ist. Der Reibbelag 17 liegt somit vorgespannt an den Reibflächen 35 der Reib-Einsätze 26 an. In Richtung 8 und senkrecht dazu in der durch den Zwischensteg 13 gebildeten Ebene wird der Reibbelag 17 durch die Stirnseiten 16 und Längsseiten 15 gehalten. Der eine Reibbelag 17 liegt direkt an den sich gegenüberliegenden Reibflächen 35 an. Es ist somit genau nur ein einziger Reibbelag 17 erforderlich, um an zwei gegenüberliegenden Reibflächen 35 reibend zu wirken. Durch die Form der Ausnehmung 14 und die Umfangsgestaltung des Reibbelags 17 kann die Dämpfungscharakteristik des Dämpfers 1 weitgehend frei eingestellt werden.

Wird der Stößel 4 entlang der Richtung 8 eingeschoben, so wird der Reibbelag 17 aufgrund der Haftreibungskräfte zwischen den Reibflächen 20 und den Reibflächen 35 zunächst teilweise gestaucht, wodurch ein geringfügiger Freilaufeffekt erzielt wird. Anschließend erfolgt ein zunehmender Aufbau der Gleitreibungskraft. Dasselbe gilt für das anschließende Herausziehen entgegen der Richtung 8 des Stößels 4 aus dem Gehäuse 2. Ist die Länge L_{R} des Reibbelags 17 in axialer Richtung kleiner als die axiale Länge L_{A} der Ausnehmung 14, so kommt es beim Einschieben bzw. Herausziehen des Stößels 3 zu einer stärkeren Stauchung des Reibbelags 17. Es tritt somit ein ausgeprägterer Freilaufeffekt auf. Ist die Länge L_{R} des Reibbelages 17 größer als die Länge L_{A} der Ausnehmung 14, der Reibbelag 17 also in der Ausnehmung 14 axial vorgespannt, so tritt ein geringerer bzw. kein Freilaufeffekt auf. Der Reibkraftaufbau ist somit abrupter. An dem Aufbau vorteilhaft ist die beeinflussbare Charakteristik, d. h. beispielsweise Freilauf oder weicher Reibkraftaufbau. Entsprechende Charakteristiken wirken sich positiv auf die Laufeigenschaften der Waschmaschine aus. Beispielsweise werden die Bodenkräfte reduziert und die Akustik verbessert.

Eine zusätzliche Verbesserung der Laufeigenschaften und damit eine reduzierte Geräuschentwicklung ergibt sich mit den Ausgleichs-Elementen 28, die für das Spiel zwischen den Gehäuse-Wänden 25 und den Oberflächen des Zwischenstegs 13 am Stößel 4 ausgleichen. Ein Klappern in Folge einer Beweglichkeit des Stößels 4 in einer zur Mittenebene 29 senkrechten Richtung oder eines Kippens um die Querachse 31 sind verhindert.

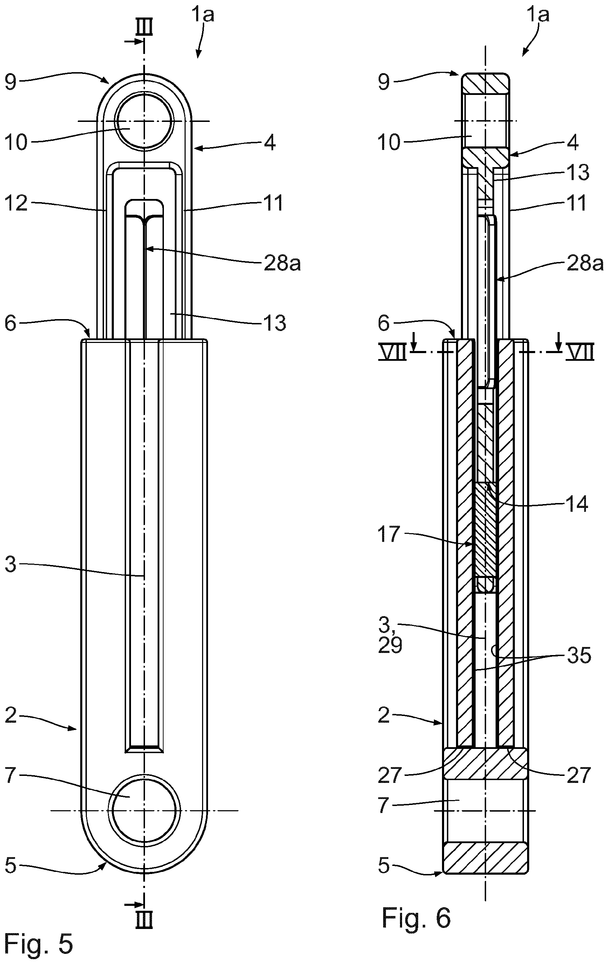

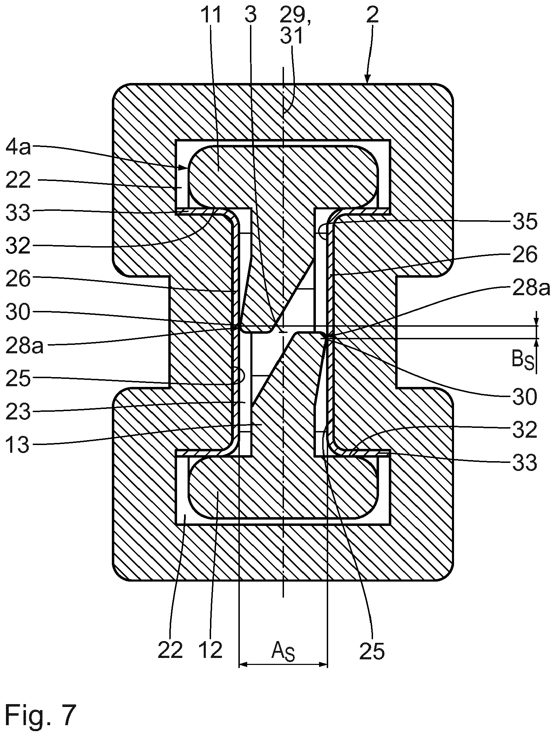

Im Folgenden wird unter Bezugnahme auf Fig. 5 bis 7 ein zweites Ausführungsbeispiel der Erfindung beschrieben. Identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Bei dem Dämpfer 1a sind die Ausgleichs-Elemente 28a jeweils parallel zur Mittel-Längs-Achse 3 orientiert. Die Herstellung des Dämpfers 1a mit Linear-Lamelle ist vereinfacht.

Die Ausgleichs-Elemente 28a weisen eine reduzierte Stützbreite Bs auf. Die integrale Kontaktfläche 30, mit der der Stößel 4a am Gehäuse 2 anliegt, ist reduziert. Dadurch ist der Reibungseinfluss des Stößels 4a gegenüber dem Reibungseinfluss des Reibbelags 17 reduziert. Die Einstellung der Reibkraft, insbesondere der Reibungswirkung des Reibungsdämpfers 1a, ist dadurch verbessert. Die Reibungswirkung kann gezielter und unmittelbarer beeinflusst werden.

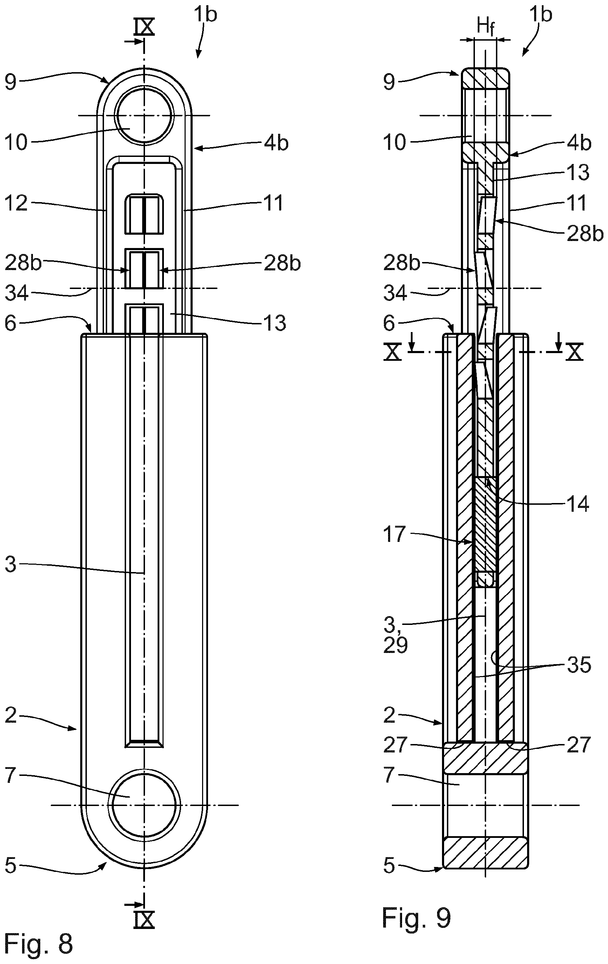

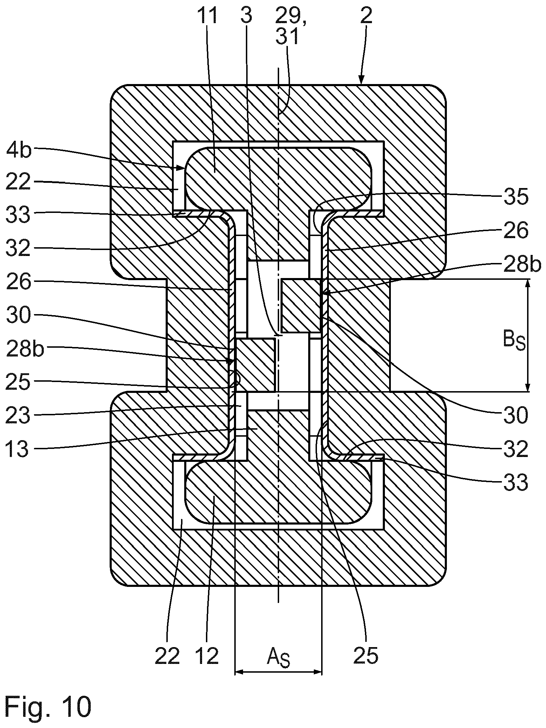

Im Folgenden wird unter Bezugnahme auf Fig. 8 bis 10 ein drittes Ausführungsbeispiel der Erfindung beschrieben. Identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Der Dämpfer 1b weist mehrere, entlang der Mittel-Längs-Achse beabstandet zueinander angeordnete Ausgleichs-Elemente 28b auf. Die Ausgleichs-Elemente 28b erstrecken sich ebenfalls beidseitig senkrecht zur Mittenebene 29. Die Ausgleichs-Elemente 28b sind einstückig am Stößel 4b, insbesondere im Zwischensteg 13, angeformt und um eine Schwenkachse 34 schwenkbar. Die Schwenkachse 34 ist insbesondere parallel zu der Querachse 31.

Gemäß dem gezeigten Ausführungsbeispiel sind entlang der Mittel-Längs-Achse 3 vier Ausgleichs-Elemente 28b hintereinander an dem Stößel 4b ausgebildet. Durch die separate Ausführung der einzelnen Ausgleichs-Elemente 28b kann sowohl die Stützbreite Bₛ als auch die freie Höhe H_{f} flexibler angepasst und eingestellt werden.

Es versteht sich, dass mehr oder weniger als vier Ausgleichs-Elemente 28b entlang der Mittel-Längs-Achse 3 angeordnet sein können. Vorteilhaft ist es, wenn sich die Gruppe der Ausgleichs-Elemente 28b über die vorteilhafte Länge L_{AE} erstreckt, die mindestens 50 % der freien Länge L_{f} beträgt.

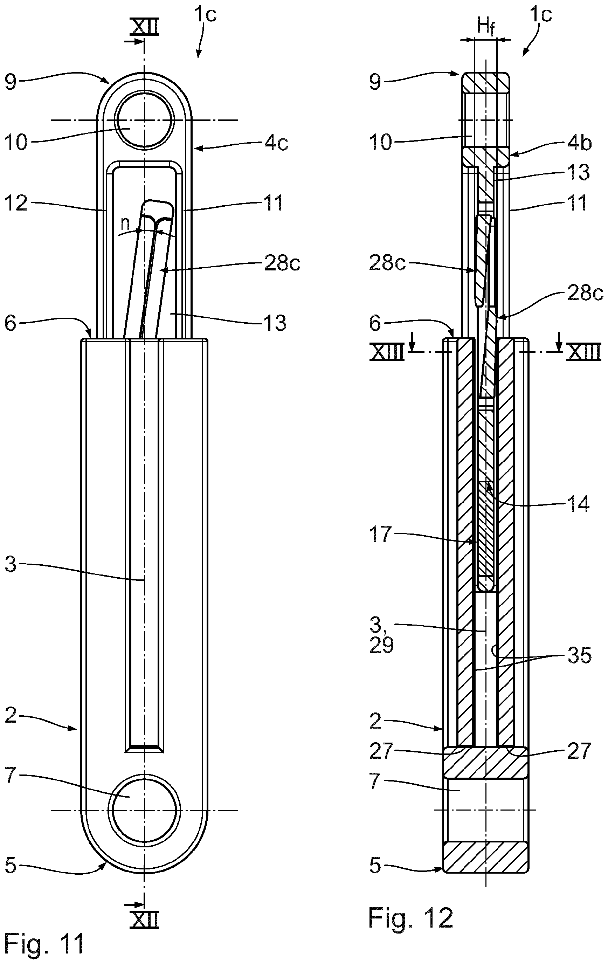

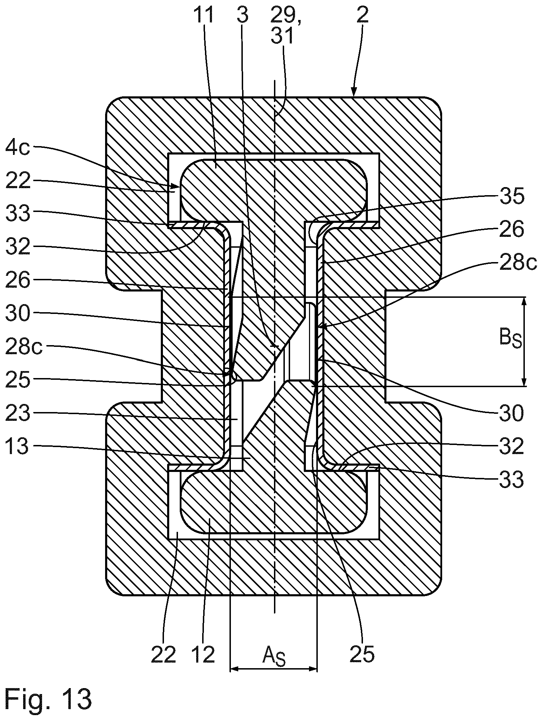

Im Folgenden wird unter Bezugnahme auf Fig. 11 bis 13 ein viertes Ausführungsbeispiel der Erfindung beschrieben. Identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Die Ausgleichs-Elemente 28c sind als Linear-Lamelle ausgeführt, wobei die Längsachsen der Ausgleichs-Elemente 28c quer mit einem Neigungswinkel n gegenüber der Mittel-Längs-Achse 3 orientiert sind. Auch die Ausgleichs-Elemente 28c erstrecken sich an dem Stößel 4c beidseitig senkrecht zur Mittenebene 29.

Die Herstellung, insbesondere die Fertigung, der Schräg-Lamelle 28c ist unkompliziert entsprechend der Linear-Lamelle des zweiten Ausführungsbeispiels. Die Schräg-Lamelle 28c weist eine erhöhte Stützbreite Bs auf, ist also verschleißarm ausgeführt.

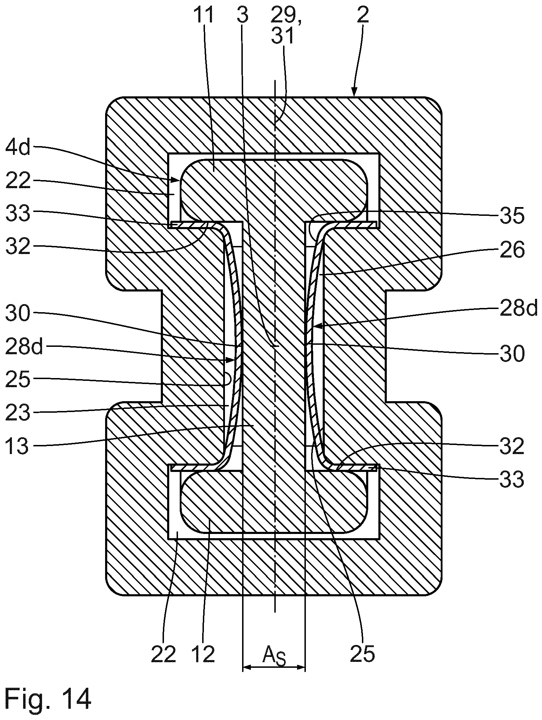

Im Folgenden wird unter Bezugnahme auf Fig. 14 ein fünftes Ausführungsbeispiel der Erfindung beschrieben. Identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten d.

Bei dem Dämpfer 1d sind die Ausgleichs-Elemente 28d am Gehäuse 2 angeordnet. Die Ausgleichs-Elemente 28d sind insbesondere als eine besondere Ausführung der Reib-Einsätze 26 gebildet.

Anders als in den vorherigen Ausführungsbeispielen, verlaufen die Reib-Einsätze 26 in dem dem Zwischenkanal 23 zugewandten Bereich nicht parallel zu den Zwischenkanal-Wänden 25 des Gehäuses 2. Die Ausgleichs-Elemente 28d sind als gebogene Blechabschnitte ausgeführt, so dass sie zum Ausgleich des Spiels zwischen dem Stößel 4d und dem Gehäuse 2 an dem Stößel 4d anliegen.

Die Ausgestaltung, insbesondere die Fertigung, des Stößels 4d ist vereinfacht. Insbesondere ist der Stößel 4d Ausgleichs-Element-frei ausgeführt. Eine unerwünschte Verunreinigung, insbesondere in Spalten des Stößels 4, beispielsweise durch Flusen ist vermieden. Spalte und/oder Schlitze, in welchen sich Flusen sammeln können, sind nicht vorgesehen. Die Ausgestaltung des Dämpfers 1d ist robust und unkompliziert.

Die Ausgleichs-Elemente 28d erstrecken sich entlang der Mittel-Längs-Achse 3 entlang der Ausgleichs-Element-Länge L_{AE}.

Gemäß einem nicht dargestellten Ausführungsbeispiel ist es auch möglich, mindestens ein Ausgleichs-Element am Gehäuse 2 und mindestens ein weiteres Ausgleichs-Element am Stößel 4 vorzusehen.

## Patentansprüche

1. Dämpfer, insbesondere für Waschmaschinen mit Schleudergang, mit
a. einem eine Mittel-Längs-Achse (3) aufweisenden, einen Gehäuse-Innenraum (21) zumindest teilweise durch Gehäuse-Wände (25) umschließenden Gehäuse (2),
b. einem in dem Gehäuse (2) entlang der Mittel-Längs-Achse (3) verschiebbaren, aus dem Gehäuse (2) herausgeführten Stößel (4; 4a; 4b; 4c; 4d),
c. an freien Enden (5, 9) des Gehäuses (2) und des Stößels (4; 4a; 4b; 4c; 4d) angeordneten Befestigungs-Elementen (7, 10),
**gekennzeichnet durch**
d. mindestens ein Ausgleichs-Element (28; 28a; 28b; 28c; 28d) zum Ausgleichen eines Spiels zwischen den Gehäuse-Wänden (25) und dem Stößel (4; 4a; 4b; 4c; 4d).

2. Dämpfer gemäß Anspruch 1, **dadurch gekennzeichnet, dass** das mindestens eine Ausgleichs-Element (28; 28a; 28b; 28c) am Stößel (4; 4a; 4b; 4c) integriert ausgebildet ist.

3. Dämpfer gemäß einem der vorangehenden Ansprüche, **dadurch gekennzeichnet, dass** das mindestens eine Ausgleichs-Element (28d) am Gehäuse (2) angeordnet, insbesondere daran befestigt und insbesondere integriert ausgebildet ist.

4. Dämpfer gemäß einem der vorangehenden Ansprüche, **dadurch gekennzeichnet, dass** das mindestens eine Ausgleichs-Element (28; 28a; 28b; 28c; 28d) eine Ausgleichs-Element-Länge (L_{AE}) aufweist, die sich entlang der Mittel-Längs-Achse (3) erstreckt.

5. Dämpfer gemäß einem der vorangehenden Ansprüche, **gekennzeichnet durch** zwei Ausgleichs-Elemente (28; 28a; 28b; 28c; 28d), die insbesondere in gegensätzlich orientierten Richtungen bezüglich einer Mittenebene (29) des Stößels (4; 4a; 4b; 4c; 4d) orientiert sind.

6. Dämpfer gemäß einem der vorangehenden Ansprüche, **dadurch gekennzeichnet, dass** das mindestens eine Ausgleichs-Element (28; 28a; 28b; 28c; 28d) den Stößel (4; 4a; 4b; 4c; 4d) spielfrei im Gehäuse (2) hält.

7. Dämpfer gemäß einem der vorangehenden Ansprüche, **dadurch gekennzeichnet, dass** das mindestens eine Ausgleichs-Element (28; 28a; 28b; 28c) als Lamelle ausgeführt ist, wobei die Lamelle zumindest abschnittsweise quer zur Mittel-Längs-Achse (3) verläuft und insbesondere wellenförmig ausgeführt und/oder schräg orientiert ist.

8. Dämpfer gemäß einem der vorangehenden Ansprüche, **dadurch gekennzeichnet, dass** das Gehäuse (2) und/oder der Stößel (4; 4a; 4b; 4c; 4d) im Querschnitt, insbesondere senkrecht zur Mittel-Längs-Achse (3), doppel-T-förmig ausgebildet ist.

9. Dämpfer gemäß einem der vorangehenden Ansprüche, **dadurch gekennzeichnet, dass** der Stößel (4; 4a; 4b; 4c; 4d) einen eine Mittenebene (29) definierenden Zwischensteg (13) aufweist, wobei insbesondere die Mittenebene (29) die Mittel-Längs-Achse (3) umfasst.

10. Dämpfer gemäß einem der vorangehenden Ansprüche, **dadurch gekennzeichnet, dass** der Stößel (4; 4a; 4b; 4c; 4d) mindestens eine Reibbelags-Ausnehmung (14) aufweist, die insbesondere den Stößel (4; 4a; 4b; 4c; 4d) vollständig durchdringt, wobei insbesondere die mindestens eine Reibbelags-Ausnehmung (14) eine rechteckige oder rautenförmige Form aufweist.

11. Dämpfer gemäß Anspruch 10, **dadurch gekennzeichnet, dass** die Reibbelags-Ausnehmung (14) begrenzt wird durch an den axialen Enden liegende Stirnseiten (16) und diese verbindende Längsseiten (15), wobei insbesondere mindestens eine Stirnseite (16) gezackt ausgebildet ist.

12. Dämpfer gemäß einem der vorangehenden Ansprüche, **gekennzeichnet durch** mindestens einen, insbesondere in der mindestens einen Reibbelags-Ausnehmung (14) angeordneten, an mindestens einer g Gehäuse-Wand (25) reibend anliegenden, Reibbelag (17), wobei insbesondere die Form des Reibbelages (17) der Form einer Reibbelags-Ausnehmung (14) angepasst ist, wobei insbesondere der Reibbelag (14) an mindestens einer Stirnseite (19) gezackt ausgebildet ist.

13. Dämpfer gemäß einem der vorangehenden Ansprüche, **dadurch gekennzeichnet, dass** das Gehäuse (2) einen insbesondere einteilig ausgeführten Gehäuse-Korpus aufweist

14. Dämpfer gemäß einem der vorangehenden Ansprüche, **dadurch gekennzeichnet, dass** auf der Innenseite des Gehäuses (2) mindestens ein Reib-Einsatz (26) angeordnet ist, der insbesondere das mindestens eine Ausgleichs-Element (28d) bildet.
